# EUROPÄISCHE PATENTSCHRIFT

(11) **EP 0 783 872 B1**
(45) Veröffentlichungstag und Bekanntmachung des Hinweises auf die Patenterteilung: **17.09.2003**
(21) Anmeldenummer: 96113127.3
(22) Anmeldetag: 16.08.1996
(51) Int. Cl.: A61C 5/06, B65D 81/32

(54) **Misch-und Applikationskapsel für Dentalmaterial**
Capsule for mixing and applying dental material
Capsule de mélange et d'application pour matériau dentaire

(30) Priorität: 13.01.1996 DE 29600523 U
(43) Veröffentlichungstag der Anmeldung: 16.07.1997
(73) Patentinhaber: VOCO GmbH, 27472 Cuxhaven (DE)
(72) Erfinder: Plaumann, Manfred, 27478 Cuxhaven (DE); Erxleben, Jörg, 27476 Cuxhaven (DE)
(74) Vertreter: Patentanwälte Hauck, Graalfs, Wehnert, Döring, Siemons, Schildberg

(56) Entgegenhaltungen:
- DE-A- 4 232 062
- FR-A- 2 694 920
- US-A- 3 655 035
- US-A- 3 860 114
- US-E- R E33 801

## Beschreibung

Die Erfindung betrifft eine Misch- und Applikationskapsel für Dentalmaterial nach dem Oberbegriff des Anspruches 1.

Misch- und Applikationskapseln sind beispielsweise aus der DE 43 15 920 C1 und der DE 42 32 062 A1 bekannt. In diesen Kapseln werden Pulver und Flüssigkeit für dentale Füllungsmaterialien in dosierten Mengen an den Zahnarzt geliefert. Dieser nutzt dann die Kapseln zum Vereinigen (Aktivieren), Mischen und Applizieren der Materialkomponenten. Für das Mischen werden schon seit langer Zeit Mischgeräte eingesetzt, welche eingesetzte Kapseln schütteln. Gemäß EP 157 121 wird die Kapsel zum Aktivieren in eine zusätzliche Zange eingespannt. Nach dem DE 88 09 184 U1 wird sowohl das Aktivieren als auch das Applizieren des Dentalmaterials mit Hilfe eines Klauenwerkzeuges durchgeführt. Diese beiden Wege der Aktivierung sind umständlich und im Falle der EP 157 121 B1 sogar teuer, da ein zusätzliches Gerät gebraucht wird.

Bei einer Kapsel gemäß DE 42 32 061 A1 kann zwar eine Aktivierung von Hand erfolgen. Jedoch ist die Gefahr gegeben, daß sich der Applikationskolben beim Verdrehen des Aktivierungskolbens mitdreht und somit die Aktivierung unvollständig ausfällt. Um dies zu verhindern, kann der Applicationskolben mit der Bohrung versplintet werden. Das Entfernen des Splintes vor Betätigung des Applikationskolbens ist mühselig. Bei der Kapsel gemäß DE 37 23 985 A1 hat das Pulver Kontakt zur Umgebungsluft. Moderne Zemente haben auch im Pulver reaktive Bestandteile, so daß die Gefahr einer Anhärtung des Pulvers infolge von Luftfeuchtigkeit gegeben ist.

Davon ausgehend liegt der Erfindung die Aufgabe zugrunde, eine Misch- und Applikationskapsel der eingangs genannten Art zur Verfügung zu stellen, die leicht aktivierbar und applizierbar ist.

Die Aufgabe wird durch eine Kapsel mit den Merkmalen des Anspruches 1 gelöst. Vorteilhafte Ausgestaltungen der Kapsel sind in den Unteransprüchen angegeben.

Bei einer Ausführungsform der erfindungsgemäßen Kapsel wird durch eine Preßpassung der Gewindeverbindung zwischen Applikationskolben und Aktivatorkolben im Bereich der Gewindeverbindung eine Abdichtung der Mischkammer und/oder Vorratskammer zur Umgebung erreicht. Infolgedessen kann das Pulver in die Mischkammer und/oder Vorratskammer eingebracht werden, ohne dort vor Gebrauch anzuhärten. Die Preßpassung kann den Aktivatorkolben gegenüber dem Applikationskolben und damit die Vorratskammer gegenüber der Umgebung abdichten. Bevorzugt erzeugt sie eine den Applikationskolben gegenüber dem Kapselgehäuse abdichtende Aufweitung der Wandung des Applikationskolbens. Dann kann das Pulver ohne die Gefahr einer vorzeitigen Reaktion in die Mischkammer eingebracht sein.

Erfindungsgemäß wird durch eine zwischen Applikationskolben und Kapselgehäuse ausgebildete axiale Führung ein Verdrehen des Applikationskolbens im Kapselgehäuse verhindert und eine vollständige Aktivierung des Dentalmaterials sichergestellt. Die Führung ist vorzugsweise durch mindestens eine zusammenwirkende Führungsschiene am Applikationskolben und Führungsnut in der Wandung des Kapselgehäuses gebildet. Ihre Vorteile kommen bereits bei herkömmlichen Kapseln mit Gewindeverbindung zwischen Applikationskolben und Aktivatorkolben zum Tragen. Besonders vorteilhaft ist jedoch die Kombination mit einer aus Abdichtungsgründen vorhandenen Preßpassung der Gewindeverbindung, die ein Mitdrehen des Applikationskolbens fördert.

Die Erfindung wird nachfolgend anhand der anliegenden Zeichnungen eines Ausführungsbeispiels näher beschrieben. In den Zeichnungen zeigen:
- Fig. 1 bis 3: die Kapsel im Längsschnitt montiert (Fig. 1), aktiviert (Fig. 2) und entleert (Fig. 3);

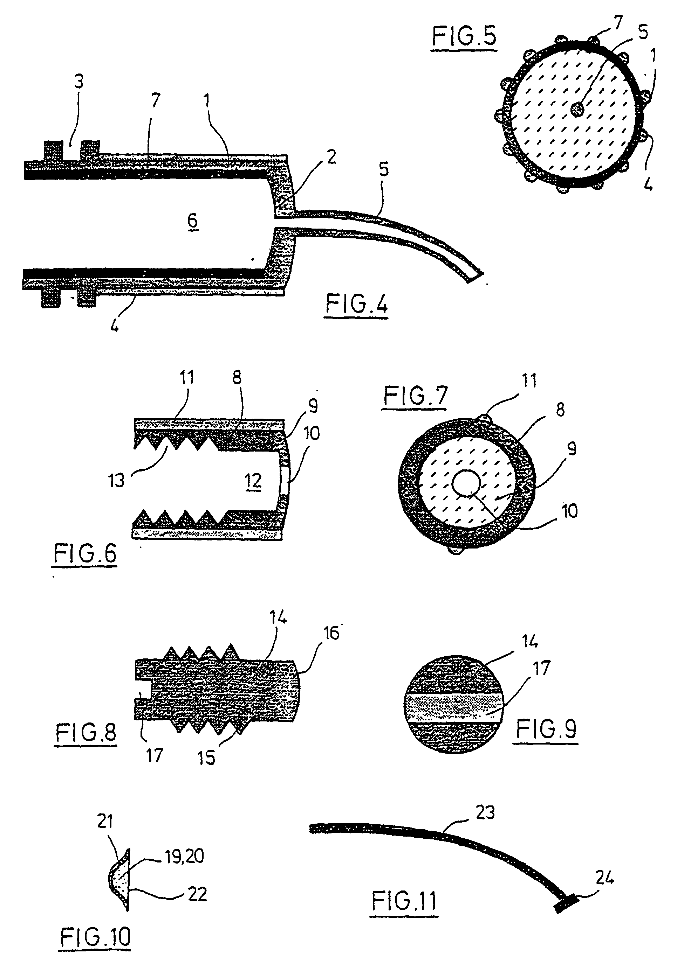

- Fig. 4 und 5: das Kapselgehäuse im Längsschnitt (Fig. 4) und in einem Querschnitt (Fig. 5);
- Fig. 6 und 7: den Applikationskolben im Längsschnitt (Fig. 6) und in linker Seitenansicht (Fig. 7);
- Fig. 8 und 9: den Aktivatorkolben im Längsschnitt (Fig. 8) und in linker Seitenansicht (Fig. 9);
- Fig. 10: ein Flüssigkeitskissen im Längsschnitt;
- Fig. 11: einen Kapselverschluß im Längsschnitt.

Die Misch- und Applikationskapsel hat ein im wesentlichen zylindrisches Kapselgehäuse 1, das einenends durch einen gerundeten Kapselboden 2 geschlossen ist und anderenends am Außenumfang eine Ringnut 3 aufweist. Zwischen Ringnut 3 und Kapselboden 2 hat das Kapselgehäuse außen eine Rändelung 4. Der Kapselboden hat eine Ausbringöffnung in Form einer leicht gebogenen Applikationskanüle 5. Die Kanüle 5 mündet in eine Mischkammer 6 im Kapselgehäuse 1. In der zylindrischen Wandung der Mischkammer 6 sind zumindest zwei einander diametral gegenüberliegende, axiale Nuten 7 ausgebildet.

In die Mischkammer 6 ist ein Applikationskolben 8 eingeschoben. Der Applikationskolben 8 ist im wesentlichen zylindrisch und einenends von einem Applikationskolbenboden 9 verschlossen, der komplementär zum Kapselboden 2 gerundet ist. Der Applikationskolbenboden 9 hat eine Mischöffnung 10. Am Außenumfang des Applikationskolbens 8 sind mindestens zwei einander diametral gegenüberliegende, axiale Führungsschienen 11 angeordnet. Innen hat der Applikationskolben 8 eine Vorratskammer 12. Diese weist nahe dem offenen Ende des Applikationskolbens 8 ein Innengewinde 13 auf.

In den Applikationskolben 8 ist ein im wesentlichen zylindrischer Aktivatorkolben 14 geschraubt, der hierzu an seinem Außenumfang ein Außengewinde 15 aufweist. Der im wesentlichen massive Aktivatorkolben 14 hat einenends einen Aktivatorkolbenboden 16, der komplementär zum Applikationskolbenboden gerundet ist. Anderenends hat der Aktivatorkolben 14 eine Nut 17. Der Außendurchmesser der 1,5 vorderen, d.h. dem Aktivatorkolbenboden 16 näheren, Gänge des Außengewindes 15 ist etwa 0,1 mm stärker als der maximale Außendurchmesser des Innengewindes 13.

In der Mischkammer 6 ist eine Komponente einer Dentalmischung angeordnet, nämlich ein Pulver 18. Die Vorratskammer 12 enthält eine weitere Komponente, nämlich eine Flüssigkeit 19. Diese ist in ein Flüssigkeitskissen 20 eingeschlossen, welches eine Hülle aus einer Folien-Haube 21 und einer dünnen Folie 22 an der vorderen, dem Applikationskolbenboden 9 zugewandten Seite aufweist. Das Flüssigkeitskissen 20 ist an seinem Außenumfang in der Mischkammer 12 gehalten.

In die Applikationskanüle 5 ist ein nadelförmiger Kapselverschluß 23 eingesetzt. Dieser hat einen aus der Kanüle 5 herausragenden, seitlich überstehenden Kopf 24, der ein Herausziehen erleichtert.

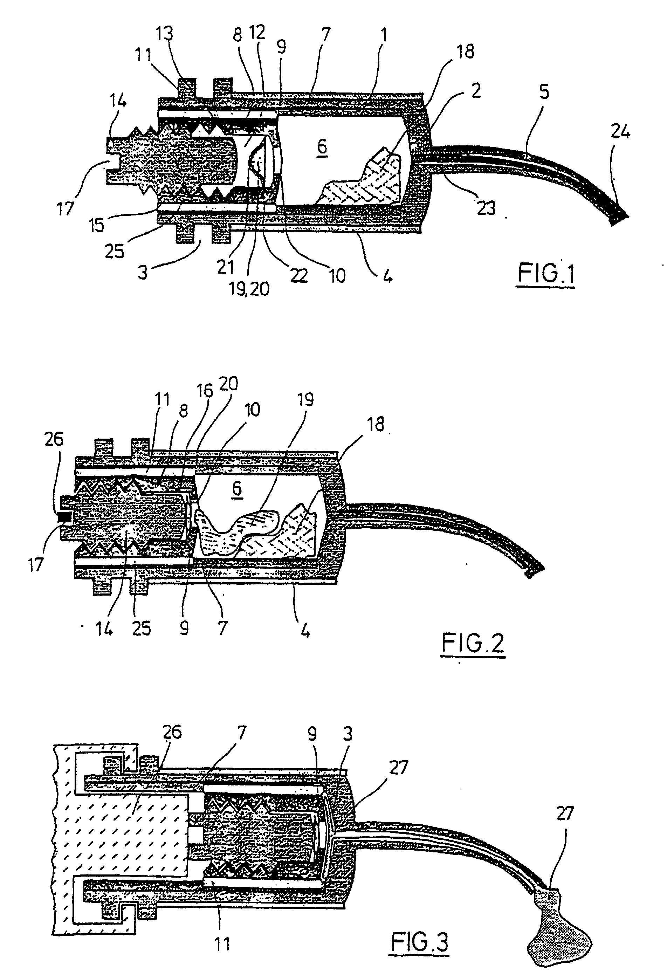

Gemäß Fig. 1 wird die Kapsel so montiert, daß Pulver 18 und Flüssigkeit 19 in dosierten Mengen vorliegen. Die Gewindeverbindung 13, 15 hat infolge des Übermaßes des Außengewindes 15 eine Preßpassung, die eine Aufweitung 25 des Applikationskolbens 8 im Bereich der 1,5 vorderen Gewindegänge des Aktivatorkolbens 14 bewirkt. Die Aufweitung 25 dichtet den Applikationskolben 8 gegenüber dem Kapselgehäuse 1 ab. Infolgedessen ist das Pulver 18 an dieser sensiblen Stelle gegen Feuchtigkeit aus der Umgebungsluft geschützt. Zudem dichtet die Preßpassung auch den Verbindungsbereich zwischen Applikationskolben 8 und Aktivatorkolben 14 ab, so daß durch diesen ebenfalls keine Feuchtigkeit an das Pulver 18 gelangen kann. Vorn wird eine ausreichende Abdichtung durch den Kapselverschluß 24 erreicht.

Gemäß Fig. 2 wird zwecks Aktivierung der Kapsel der Aktivatorkolben 14 mittels einer in die Nut 17 eingreifenden Drehhilfe 26 (z.B. der Griff einer Applikationszange) in den Applikationskolben 8 gedreht. Dabei wandert die abdichtende Aufweitung 25 nach vorn. Die Führungsschienen 11 und Führungsnuten 7 verhindern hierbei ein Verdrehen des Applikationskolbens 8. Die Rändelung 4 erleichtert ein Halten der Kapsel an der Außenseite. Der Aktivatorkolben 14 preßt gegen das Flüssigkeitskissen 19, welches sich an der dünneren Folie 22 öffnet und Flüssigkeit 19 durch die Mischöffnung 10 in die Mischkammer 6 abgibt. Durch die Rundung des Aktivatorkolbenbodens 16 und die komplementäre Rundung des Applikationskolbenbodens 9 wird eine vollständige Entleerung des Flüssigkeitskissens 20 gewährleistet. In einem Kapselmischer werden anschließend Pulver 18 und Flüssigkeit 19 gemischt.

Fig. 3 zeigt die Applikation der angemischten Dentalmasse. Hierbei wird die Kapsel mittels der Ringnut 3 in einer Applikationszange 26 befestigt. Der Kapselverschluß 23 wird entfernt und die Dentalmasse 27 mit der Zange 26 ausgepreßt. Die aufeinander abgestimmten Rundungen des Applikationskolbenbodens 9 und des Kapselbodens 2 sorgen für eine fast vollständige Entleerung der Mischkammer 6. Mittels der gebogenen Applikationskanüle 5 ist eine Direktapplikation auch an schwer zugänglichen Stellen möglich.

## Patentansprüche

1. Misch- und Applikationskapsel für Dentalmaterial aus einer vordosierten Menge eines Pulvers und einer vordosierten und mit dem Pulver zu mischenden Menge Flüssigkeit, mit einem Kapselgehäuse (1), einer darin ausgebildeten Mischkammer (6), einer die Mischkammer (6) mit der Umgebung verbindenden Ausbringöffnung (5), einem in der Mischkammer (6) axial verschieblichen Applikationskolben (8), einer in dem Applikationskolben (8) ausgebildeten Vorratskammer (12), einer die Vorratskammer (12) mit der Mischkammer (6) verbindenden Mischöffnung (10) des Applikationskolben (8) und einem in der Vorratskammer (12) des Applikationskolbens (8) durch Schrauben einer Gewindeverbindung (13, 15) axial verschieblichen Aktivatorkolben (14), wobei das Pulver (18) und die Flüssigkeit (19) voneinander getrennt in die Mischkammer (6) und die Vorratskammer (12) eingebracht und durch Vorschieben des Aktivatorkolbens (14) mischbar und durch Vorschieben des Applikationskolbens (8) applizierbar sind, **dadurch gekennzeichnet, daß** zwischen Applikationskolben (8) und Kapselgehäuse (1) eine axiale Führung (7, 11) ausgebildet ist, die ein Verdrehen des Applikationskolbens (8) im Kapselgehäuse (1) verhindert.

2. Kapsel nach Anspruch 1, **dadurch gekennzeichnet, daß** die Gewindeverbindung (13, 15) zwischen Applikationskolben (8) und Aktivatorkolben (14) eine die Mischkammer (6) und/oder die Vorratskammmer (12) im Bereich der Gewindeverbindung (13, 15) abdichtende Preßpassung aufweist.

3. Kapsel nach Anspruch 2, **dadurch gekennzeichnet, daß** die Preßpassung eine den Applikationskolben (8) gegenüber dem Kapselgehäuse (1) abdichtende Aufweitung (25) der Wandung des Applikationskolbens (8) erzeugt.

4. Kapsel nach einem der Ansprüche 2 oder 3, **dadurch gekennzeichnet, daß** das Außengewinde (15) des Aktivatorkolbens (14) einen Außendurchmesser aufweist, der um etwa 0,1 mm größer ist als der Außendurchmesser des Innengewindes (13) des Applikationskolbens (8).

5. Kapsel nach einem der Ansprüche 2 bis 4, **dadurch gekennzeichnet, daß** etwa die ersten 1,5 Gewindegänge der Gewindeverbindung (13, 15) zwischen Applikationskolben (8) und Aktivatorkolben (14) eine Preßpassung haben.

6. Kapsel nach einem der Ansprüche 1 bis 5, **dadurch gekennzeichnet, daß** die Führung mindestens eine zusammenwirkende Führungsschiene (11) am Applikationskolben (8) und Führungsnut(7) in der Wandung des Kapselgehäuses aufweist.

7. Kapsel nach einem der Ansprüche 1 bis 5, **dadurch gekennzeichnet, daß** die Führung aufeinander abgestimmte, unrunde Außen- und Innenkonturen des Applikationskolbens (8) und des Kapselgehäuses (1) hat, insbesondere vieleckige, vorzugsweise 5- bis 10-eckige oder ovale Konturen.

8. Kapsel nach einem der Ansprüche 1 bis 7, **dadurch gekennzeichnet, daß** die Flüssigkeit (19) in einem Flüssigkeitskissen (20) mit einer durch Andrücken des Aktivatorkolbens (14) zerstörbaren HülIe (21, 22) in die Vorratskammer (12) eingebracht ist.

9. Kapsel nach einem der Ansprüche 1 bis 8, **dadurch gekennzeichnet, daß** der Aktivatorkolbenboden (16), der Applikationskolbenboden (9) und der Kapselboden (2) komplementäre Rundungen für eine vollständige Entleerung der Flüssigkeit und der Mischkammer aufweisen.

10. Kapsel nach einem der Ansprüche 1 bis 9, **dadurch gekennzeichnet, daß** das Kapselgehäuse (1) am Außenumfang eine Rändelung (11) zum Halten beim Mischen und Applizieren aufweist.

11. Kapsel nach einem der Ansprüche 1 bis 10, **dadurch gekennzeichnet, daß** das Kapselgehäuse (1) an einem Ende eine Ringnut (3) zur Verbindung mit einer auf ein Ende von Aktivatorkolben (14) und/oder Applikationskolben (8) wirkenden Ausbringzange (26) aufweist.

12. Kapsel nach einem der Ansprüche 1 bis 11, **dadurch gekennzeichnet, daß** der Aktivatorkolben (14) an dem von der Mischkammer (6) abgewandten Ende einen Schlitz (17) für den Eingriff einer Drehhilfe (26) hat.

13. Kapsel nach einem der Ansprüche 1 bis 12, **dadurch gekennzeichnet, daß** der Applikationsausgang die Form einer gebogenen Kanüle (5) aufweist.

14. Kapsel nach einem der Ansprüche 1 bis 13, **dadurch gekennzeichnet, daß** in den Applikationsausgang (5) ein nadelförmiger Kapselverschluß (23) eingesetzt ist.

## Claims

1. Mixing and application capsule for dental material from a predosed amount of a powder and a predosed amount of a liquid which is to be mixed with the powder, with a capsule shell (1), a mixing chamber (6) formed therein, a discharge aperture (5) connecting the mixing chamber (6) with the surroundings, an application piston (8) axially movable in the mixing chamber (6), a reservoir (12) formed in the application piston (8), a mixing aperture (10) of the application piston (8) connecting the reservoir (12) with the mixing chamber (6), and an activator piston (14), axially movable in the reservoir (12) of the application piston (8) by screwing a thread joint (13, 15), in which the powder (18) and the liquid (19) are incorporated into the mixing chamber (6) and the reservoir (12) separated from each other and are mixible by thrusting forward the activator piston (14) and applicable by thrusting forward the application piston (8), **characterised in that** an axial guidance (7, 11) is formed between application piston (8) and capsule shell (1) which prevents any twisting of the application piston in the capsule shell (1).

2. Capsule according to claim 1, **characterised in that** the thread joint (13, 15) between application piston (8) and activator piston (14) is provided with a press fit sealing the mixing chamber (6) and/or the reservoir (12) in the region of the thread joint (13, 15).

3. Capsule according to claim 2, **characterised in that** the press fit generates an expansion (25) of the wall of the application piston (8) sealing the application piston (8) with respect to the capsule shell (1).

4. Capsule according to one of claims 2 or 3, **characterised in that** the external thread (15) of the activator piston (14) has an external diameter which is about 0,1 mm larger than the external diameter of the internal thread (13) of the application piston (8).

5. Capsule according to one of claims 2 to 4, **characterised in that** about the first 1.5 convolutions of the thread joint (13, 15) between application piston (8) and activator piston (14) do have a press fit.

6. Capsule according to one of claims 1 to 5, **characterised in that** the guidance is provided with at least one co-operating guidance rail (11) on the application piston (8) and a guidance groove (7) in the wall of the capsule shell.

7. Capsule according to one of claims 1 to 5, **characterised in that** the guidance is provided with matching, noncircular external and internal profiles of the application piston (8) and the capsule shell (1), particularly with polygonal, preferably with 5- to 10-angular or oviforme profiles.

8. Capsule according to one of claims 1 to 7, **characterised in that** the liquid (19) is incorporated into the reservoir (12) in a liquid pillow (20) with a clothing (21, 22) which is destructible by pressing on the activator piston (14).

9. Capsule according to one of claims 1 to 8, **characterised in that** the bottom (16) of the activator piston, the bottom (9) of the application piston and the bottom (2) of the capsule are provided with complementary curvatures for a complete discharge of the liquid and the mixing chamber.

10. Capsule according to one of claims 1 to 9, **characterised in that** the capsule shell (1) is provided wit a knurling (11) on the external perimeter for holding it when mixing and applying.

11. Capsule according to one of claims 1 to 10, **characterised in that** the capsule shell (1) is provided with a circular groove (3) on one end for connection with a discharging tong (26) acting upon one end of the activator piston (14) and/or application piston (8)

12. Capsule according to one of claims 1 to 11, **characterised in that** the activator piston (14) is provided on the end farther from the mixing chamber (6) with a slit (17) for the engagement of a turning aid (26).

13. Capsule according to one of claims 1 to 12, **characterised in that** the application outlet has the form of a bent canula (5).

14. Capsule according to one of claims 1 to 13, **characterised in that** a needle-shaped capsule closure (23) is lodged in the application outlet (5)

## Revendications

1. Capsule de mélange et d'application pour du matériau dentaire dune quantité prédosée d'un poudre et d'une quantité d'un liquide prédosée et à mélanger avec ledit poudre, avec un carter de capsule (1), une chambre de mélange (6) formée là-dedans, un orifice d' enlèvement (5) reliant la chambre de mélange (6) avec les environs, un piston d'application (8) axialement déplaçable dans ladite chambre de mélange (6), un réservoir (12) formé dans ledit piston d'application (8), un orifice de mélange (10) du piston d'application (8) reliant le réservoir (12) avec la chambre de mélange (6), et un piston activateur (14) axialement déplaçable dans le réservoir (12) du piston d'application (8) en vissant un assemblage par filetage (13, 15), le poudre (18) et le liquide (19) étant déposés séparés d'eux-mêmes dans la chambre de mélange (6) et le réservoir (12) et qu'ils sont miscibles par l'avancement du piston activateur (14) et qu'ils sont applicables par l'avancement du piston d'application (8), **caractérisée en ce que** un guidage axial (7, 11) est formé entre le piston d'application (8) et le carter de capsule (1) qui empêche une torsion du piston d'application (8) dans le carter de capsule (1).

2. Capsule selon la revendication 1, **caractérisée en ce que** l'assemblage par filetage (13, 14) présente un ajustage serré entre le piston d'application (8) et le piston activateur (14), qui rend étanche la chambre de mélange (6) et/ou le réservoir (12) dans la région de l'assemblage par filetage (13, 15).

3. Capsule selon la revendication 2, **caractérisée en ce que** l'ajustage serré génère un élargissement (25) de la paroi du piston d'application (8) qui rend étanche le piston d'application (8) envers le carter de capsule (1).

4. Capsule selon une des revendications 2 ou 3, **caractérisée en ce que** le filet extérieur (15) du piston activateur (14) présente un diamètre extérieur qui est plus grand que le diamètre extérieur du filet de vis intérieur (13) du piston d'application (8) par 0,1 mm environ.

5. Capsule selon une quelconque des revendications 2 à 4, **caractérisée en ce que** les premiers 1,5 pas de filet environ de l'assemblage par filetage (13, 15) entre le piston d'application (8) et le piston activateur (14) ont un ajustage serré.

6. Capsule selon une quelconque des revendications 1 à 5, **caractérisée en ce que** le guidage présente au moins une glissière de guidage (11) dans le piston d'application (8) et une rainure de guidage (7) dans la paroi du carter de capsule coopérantes

7. Capsule selon une quelconque des revendications 1 à 5, **caractérisée en ce que** le guidage a des profils extérieurs et intérieurs du piston d'application (8) et du carter de capsule (1) en faux rond adaptés sur eux-mêmes, particulièrement des profils polygonaux, préférablement 5 à 10 angulaires.

8. Capsule selon une quelconque des revendications 1 à 7, **caractérisée en ce que** le liquide (19) est implanté dans le réservoir (12) dans un coussin de liquide (20) avec une enveloppe qui peut être détruite par l'appui du piston activateur (14).

9. Capsule selon une quelconque des revendications 1 à 8, **caractérisée en ce que** le fond du piston activateur (16), le fond du piston d'application (9) et le fond de la capsule (2) présentent des courbures complémentaires pour un vidage complet du liquide et de la chambre de mélange.

10. Capsule selon une quelconque des revendications 1 à 9, **caractérisée en ce que** le carter de capsule (1) présente un moletage (11) dans le périmètre extérieur pour le soutien pendant le mélange et l'application.

11. Capsule selon une quelconque des revendications 1 à 10, **caractérisée en ce que** le carter de capsule (1) présente dans une extrémité une rainure annulaire (3) pour l'accouplement avec une tenaille d'enlèvement (26) faisant effet sur une extrémité du piston activateur (14) et/ou du piston d'application (8)

12. Capsule selon une quelconque des revendications 1 à 11, **caractérisée en ce que** le piston activateur (14) a une fente (17) pour l'engrènement d'une assistance de tournage (26) dans l'extrémité opposée a la chambre de mélange (6).

13. Capsule selon une quelconque des revendications 1 à 12, **caractérisée en ce que** la sortie d'application présente la forme d'une canule cintrée (5).

14. Capsule selon une quelconque des revendications 1 à 13, **caractérisée en ce que** dans la sortie d'application (5) est placée une fermeture de capsule en forme d'aiguille (23).
